(19) Europäisches Patentamt

European Patent Office

Office européen des brevets

(11) **EP 0 742 187 B1**

(12) **EUROPÄISCHE PATENTSCHRIFT**

(45) Veröffentlichungstag und Bekanntmachung des Hinweises auf die Patenterteilung:
**09.08.2000 Patentblatt 2000/32**

(51) Int Cl.[7]: **C04B 41/87**, F16L 9/10

(21) Anmeldenummer: **96107196.6**

(22) Anmeldetag: **07.05.1996**

(54) **Keramisches Bauteil**

Ceramic element

Elément céramique

(84) Benannte Vertragsstaaten:
**DE ES FR GB IT**

(30) Priorität: **08.05.1995 DE 19516790**

(43) Veröffentlichungstag der Anmeldung:
**13.11.1996 Patentblatt 1996/46**

(73) Patentinhaber: **THE MORGAN CRUCIBLE COMPANY PLC**
**Windsor, Berkshire SL4 1EP (GB)**

(72) Erfinder: **Sonntag, Andreas, Dr.-Ing.**
**83530 Schnaitsee (DE)**

(74) Vertreter: **Pfenning, Meinig & Partner**
**Mozartstrasse 17**
**80336 München (DE)**

(56) Entgegenhaltungen:
**DE-A- 3 707 396          FR-A- 2 707 084**

• **DATABASE WPI Section Ch, Week 8218 Derwent Publications Ltd., London, GB; Class L02, AN 82-36096E XP002026179 & JP 57 051 178 A (TOSHIBA CERAMICS KK) , 25.März 1982**

## Beschreibung

Die Erfindung betrifft ein keramisches Bauteil für Anlagen zur Herstellung und/oder Weiterverarbeitung von NE-Metallschmelzen, dessen äußere und/oder innere Oberfläche zumindest teilweise mit mindestens einer oxidkeramischen Korrosionsschutzschicht versehen ist.

In den Herstellungs- und Verarbeitungsanlagen von NE-Metallschmelzen finden keramische Werkstoffe unterschiedlicher Zusammensetzung und Eigenschaften eine breite Anwendung. Dies gilt insbesondere für thermisch und korrosiv am stärksten beanspruchte Bereiche der Anlagen, also Bereiche, die in direktem Kontakt zur heißen NE-Schmelze stehen. Erst durch den Einsatz keramischer Materialien im Schmelzbetrieb wird eine wirtschaftliche und sichere Herstellung und Verarbeitung von NE-Schmelzen möglich. Als keramische Materialien werden hierbei solche eingesetzt, die oxidische und/oder oxinitridische und/oder nitridische und/oder karbidische Phasenanteile aufweisen. Die in direktem Kontakt zur NE-Schmelze befindlichen Keramiken unterliegen jedoch einem fortwährenden korrosiven Verschleiß, der durch die hohen Temperaturen und die dabei stattfindenden chemischen Wechselwirkungen zwischen Metallschmelze und Keramik bedingt ist. So haben Metallschmelzen im schmelzflüssigen Zustand grundsätzlich eine hohe Affinität zu Sauerstoff, der aus der Gasatmosphäre oder auch aus sauerstoffhaltigen Komponenten der Keramik angeboten werden kann. Dies trifft insbesondere für Aluminiumschmelzen und deren Legierungen zu, die gegenüber nichtmetallischen Verbindungen je nach thermodynamischen Gleichgewichtsbedingungen stark reduzierend, d.h. chemisch reaktiv agieren und somit kontaminiert werden können. Daher werden z.B. als feuerfestes Auskleidungsmaterial für Aluminiumschmelzwannen solche Keramiken ausgewählt, die einen hohen $Al_2O_3$-Anteil aufweisen, oder Keramiken, die von der Metallschmelze entweder nicht oder nur schlecht benetzt werden. Bei diesen Keramiken handelt es sich insbesondere um $Si_3N_4$, SiAlON, $Si_2N_2O$, BN, siliciumnitridisch und siliciumoxinitridisch gebundene SiC-Keramiken, Kohlenstoffkeramiken (Graphit) und Keramiken mit freiem Kohlenstoffanteil und Aluminiumtitanat.

Es hat sich jedoch gezeigt, daß der Einsatz dieser Werkstoffe allein für Bauteile, die besonders hohen mechanischen Belastungen und häufigem Temperaturwechsel ausgesetzt sind, nicht ausreichend sind. Solche Bauteile sind insbesondere Bauteile, die noch mit Sauerstoff in Kontakt treten. Beispiele hierfür sind Thermoelement-Schutzrohre, Spüllanze, Heizstrahlrohr, Rührer, Gießlöffel oder Steigrohre.

Insbesondere für diese Bauteile steht jedoch dem Vorteil der vorstehend beschriebenen Werkstoffe, nämlich deren Temperaturwechsel-Beständigkeit, ein gemeinsamer Nachteil entgegen. Die nitridischen, oxinitridischen oder karbidischen Kristallphasen werden nämlich beim Einsatz in sauerstoffhaltige Gasatmosphäre (z.B. Luft, Brenneratmosphäre) zumindest oberflächlich oxidiert. Nachfolgend sind einige Beispiele für derartige oxidative Angriffe angeführt:

| $Si_3N_4$: | SiC: |
|---|---|
| $Si_3N_4 + 3\,O_2 \Leftrightarrow 3\,SiO_2 + 2\,N_2$ | $SiC + 2\,O_2 \Leftrightarrow SiO_2 + CO$ |
| $Si_3N_4 + 6\,H_2O \Leftrightarrow 3\,SiO_2 + 4\,NH_3$ | $SiC + 3\,H_2O \Leftrightarrow SiO_2 + 3\,H_2 + CO$ |
| $Si_3N_4 + 6\,CO_2 \Leftrightarrow 3\,SiO_2 + 2\,N_2 + 6\,CO$ | $SiC + 3\,CO_2 \Leftrightarrow SiO_2 + 4\,CO$ |
| | |
| $Si_2N_2O$: | BN: |
| $Si_2N_2O + 3/2\,O_2 \Leftrightarrow 2\,SiO_2 + N_2$ | $2\,BN + 3/2\,O_2 \Leftrightarrow B_2O_3 + N_2$ |
| $Si_2N_2O + 3\,H_2O \Leftrightarrow 2\,SiO_2 + 2\,NH_3$ | $2\,BN + 3\,H_2O \Leftrightarrow B_2O_3 + 3H_2 + N_2$ |
| $Si_2N_2O + 3\,CO_2 \Leftrightarrow 2\,SiO_2 + 3CO + N_2$ | $2\,BN + 3\,CO_2 \Leftrightarrow B_2O_3 + 3CO + N_2$ |

Bei der Oxidation von SiAlON bestehen die Reaktionsprodukte aus kristallinen oder auch (teil)amorphen Alumosilikaten. Die Oxidationsrate ist dabei von der gesamten offenen, d.h. äußeren und inneren Oberfläche der Keramik (letztere bedingt durch sogenannte offene Porosität), der Temperatur und dem Temperaturwechsel und dem jeweiligen Sauerstoffangebot (Sauerstoffaktivität) abhängig. Dies bedeutet, daß die nitridischen oder oxynitridischen Keramiken im direkten Kontakt mit den sauerstofffreien NE-Metallschmelzen nicht benetzt werden und entsprechend korrosionsbeständig sind. Dort aber, wo durch den Einfluß eines entsprechenden Sauerstoffangebotes die nitridischen und oxynitridischen Kristallphasen zumindest oberflächig zu $SiO_2$ oxidiert werden, geht der Korrosionsschutz verloren, da $SiO_2$, $B_2O_3$ und alumosilikatische Phasen von NE-Schmelzen benetzt und zersetzt werden können. Eine Aluminiumschmelze reagiert z.B. mit $SiO_2$ in Form einer RedOx-Reaktion nach:

$$4\,Al + 3\,SiO_2 \Leftrightarrow 2\,Al_2O_3 + 3\,Si$$

Keramiken mit nitridischem, oxynitridischem oder karbidischem Kristallphasenaufbau werden daher bei einem Einsatz in sauerstoffhaltiger Gasatmosphäre (z.B. Luft, Brennraum-Atmosphäre fossil beheizter Öfen) zumindest oberflächig oxidiert. Die Oxidationsrate ist dabei von der freien "oxidierbaren" Oberfläche der Keramik, der Temperatur und dem Temperaturwechsel und dem jeweiligen Sauerstoffangebot (Sauerstoffaktivität) abhängig. In der Praxis trifft dies insbesondere für Bauteile zu, die konstruktionsbedingt Bereiche im direkten Kontakt mit der NE-Schmelze und der sauerstoffhaltigen Gasatmosphäre einer Ofenanlage oder Verarbeitungsanlage stehen. So sind beispielsweise Thermoelement-Schutzrohre oder auch Rühraggregate, die von oberhalb des Schmelzbades in die Schmelze hineinragen, im Dreiphasenbereich Schmelze/Keramikoberfläche/Gasatmosphäre einer verstärkten Korrosion ausgesetzt, die zum vorzeitigen Ausfall des Keramikbauteiles führt. Hier kommt erschwerend hinzu, daß durch ständigen Wechsel der Schmelzbadhöhe und durch zusätzliche, auf der Schmelzbadoberfläche vorliegende Schlacke das Keramikbauteil über einen verbreiterten Übergangsbereich bevorzugt korrodiert wird.

Als weiteres Beispiel können von innen beheizte poröse Wärmeübertragungsrohre mit ebenfalls nitridischen oder oxxnitridischen Kristallphasenanteilen genannt werden. Die offene Porenoberfläche der Rohre werden durch die Brenngasatmosphäre oxidiert, so daß über den gesamten Werkstoffquerschnitt die Nichtbenetzbarkeit durch NE-Schmelzen eingebüßt wird und folglich zum vorzeitigen Ausfall des Bauteiles durch Korrosion führt (M. W. Johnston; J. A. Little: Degradation of oxidized $SiC-Si_3N_4$ in molten Aluminum, J. Mat. Sci. 25 (1990) 5284-5290). Um dieser Oxidationsproblematik und der damit abnehmenden Korrosionsbeständigkeit von nitridisch gebundenen SiC-Bauteilen entgegenzutreten, wird in dem US-Patent 5,135,893 der zusätzliche Einbau von 5 bis 45 % Kohlenstoff in Form von Graphit in offenporösen $Si_3N_4$-SiC-Keramiken beschrieben. Hier verlangsamt der Kohlenstoff die Oxidationsneigung der nitridischen und karbidischen Kristallphasen und wirkt gegenüber NE-Schmelzen zusätzlich entnetzend.

In DE 31 48 993 C2 wird ein Keramikbauteil beschrieben, das vornehmlich als Thermoelement-Schutzrohr in NE-Schmelzen eingesetzt werden soll. Hier wird auf einen keramischen Tragkörper aus z.B. $Si_3N_4$ eine "äußere Schale" aus BN aufgebracht, welches in reiner Form gegenüber NE-Schmelzen stark entnetzend wirkt und somit einen zusätzlichen Korrosionsschutz bietet.

In DE 37 08 844 C2 wird hingegen in einem Herstellungsgang auf ein geformtes, aber noch nicht gebranntes Tragrohr aus $Si_3N_4$ oder SiAlON eine zusätzliche dünne Schicht aus einem Gemisch aus BN und $SiO_2$ aufgebracht und gebrannt. Das gesinterte Endprodukt wurde auf bis zu 99 % der theoretischen Dichte verdichtet und besteht aus einem inneren Tragkörper aus $Si_3N_4$ oder SiAlON und einer äußeren, ebenfalls hochverdichteten Schicht aus $BN+SiO_2$. Auch hier dient die äußere BN-haltige Schicht als zusätzlicher Korrosionsschutz gegenüber NE-Schmelzen, die die Haltbarkeit der Thermoelement-Schutzrohre erhöhen soll.

Aber auch diese in den vorstehend genannten Dokumenten beschriebenen Maßnahmen können nicht verhindern, daß eine beschleunigte Korrosion im Dreiphasenbereich Keramikoberfläche/Gasatmosphäre/NE-Schmelze eintritt.

Ausgehend hiervon ist es deshalb die Aufgabe der vorliegenden Erfindung, ein keramisches Bauteil für Anlagen zur Herstellung und/oder Weiterverarbeitung von NE-Metallschmelzen vorzuschlagen, bei dem die bevorzugte Korrosion im kritischen Dreiphasenbereich/Keramikoberfläche/Oxidierende Gasatmosphäre/NE-Schmelze weitgehend unterdrückt ist.

Die Aufgabe wird durch die kennzeichnenden Merkmale des Anspruches 1 gelöst. Die Unteransprüche zeigen vorteilhafte Weiterbildungen auf.

Erfindungsgemäß wird vorgeschlagen, die äußere und/oder innere Oberfläche der Keramiken mit mindestens einer entnetzenden oxidischen Korrosionsschutzschicht zu versehen. Wesentlich ist, daß die Korrosionsschutzschicht eine oxidische Zusammensetzung aufweist. Das Material hierfür ist ausgewählt aus der Gruppe Anosovite, Pseudobrookite, Karrooite, $Al_2TiO_5$, $Al_2O_3$, $TiO_2$, $MgAl_2O_4$, Mullit oder deren Mischungen. Besonders bevorzugt besteht die Korrosionsschutzschicht aus Tialit, d.h. aus $Al_2TiO_5$. Die DE 37 07 396 A1 betrifft ein Verfahren zur Herstellung eines keramischen Werkstoffes und Verfahren zur Beschichtung von Werkstücken mit diesem Werkstoff. Der Werkstoff nach der DE 37 07 396 A1 wird durch Glühbehandlung eines keramischen Materials, das zu mehr als 90 % aus Aluminiumtitanat besteht, hergestellt. Aus diesem Werkstoff werden Granalien geschmolzen, die auch mittels thermischen Spritzens auf Werkstücke aufgebracht werden können.

Aus DATABASE WPI Section Ch, Week 8218 Derwent Publications Ltd. London, Class L02, AN 82-36096E und JP 57 051 178 A ist ein hitzebeständiges Material für Anwendungen in geschmolzenem Aluminium oder Zinn bekannt. Darin wird vorgeschlagen, eine Zirkonschicht auf die Oberfläche von Siliciumnitriden oder Siliciumcarbiden aufzubringen.

Da sowohl offenporöse als auch dichte Keramiken mit nitridischen, oxynitridischen oder karbidischen Phasenbestandteilen in Betracht kommen, wird erfindungsgemäß vorgeschlagen, die Schutzschicht auf die innere und äußere Oberfläche oder nur auf die innere oder nur auf die äußere Oberfläche aufzubringen. Das Aufbringen auf die äußere Oberfläche des Bauteiles wird bevorzugt mittels eines thermischen Spritzverfahrens durchgeführt. Das Aufbringen der Korrosionsschutzschicht auf die innere und/oder äußere Oberfläche ist aber auch über eine Flüssigphasenbeschichtung und/oder eine Flüssigphasentränkung und/oder eine Suspensionsbeschichtung und/oder Suspensionstränkung möglich.

Die Erfindung umfaßt somit alle keramischen Bauteile nach dem Oberbegriff des Anspruches 1 sowohl aus offenporöser als auch aus dichter Keramik, sofern sie zumindest eine Korrosionsschutzschicht, wie vorstehend beschrieben, aufweisen. Bevorzugt ist, wenn 1 bis 20 Einzelschichten mit einer Schichtdicke im Bereich von 1 bis 500 μm, bevorzugt von 1 bis 100 μm, aufgebracht werden. Im Regelfall ist es ausreichend, wenn 1 bis 40 μm aufgebracht werden. Durch das Aufbringen von mehreren Einzelschichten übereinander wird eine nochmalige Verbesserung des Korrosionsschutzes erreicht.

Es hat sich überraschenderweise gezeigt, daß sich insbesondere unter den ansonsten kritischen Bedingungen oxidierender Gasatmophären die positiven Eigenschaften der obengenannten keramischen Tragkörper (Bauteile) in Form von hohen Festigkeiten und hoher Temperaturwechsel-Beständigkeit mit den stabilen korrosionsbeständigen Eigenschaften der Korrosionsschutzschicht kombinieren lassen. Dabei fungieren die Korrosionsschutzschichten als auf dem keramischen Tragkörper fest haftende, aber gegenüber NE-Schmelzen stabile, vorzugsweise entnetzende Schutzschicht. Vorteilhafterweise begünstigen die oxidierenden Oberflächen der Nichtoxidkeramiken eine verbesserte Haftung der erfindungsgemäßen Schutzschichten, während deren chemische Resistenz/Stabilität erhalten bleibt, so daß im kritischen Dreiphasenbereich (oxidierende Gasatmosphäre/NE-Schmelze/Keramikbauteil) eine bevorzugte Korrosion nicht mehr eintreten kann. Besonders hervorzuheben ist, daß dies nicht nur dann gilt, wenn die Korrosionsschutzschicht auf die Bauteiloberfläche aufgebracht wird, sondern auch wenn die Korrosionsschutzschicht auf die inneren Oberflächen, d.h. in die Poren eingebracht wird.

Verfahrensmäßig wird bei der Herstellung der Schutzschicht auf der Bauteiloberfläche so vorgegangen, daß diese mittels eines an und für sich aus dem Stand der Technik bekannten thermischen Spritzverfahrens aufgebracht wird. Zur Herstellung der Schutzschicht auf den inneren Oberflächen wird so vorgegangen, daß die Keramiken mit anorganischen oder organischen Lösungen (z.B. Salzlösungen, Alkoxidlösungen, metallorganische Lösungen, Kolloidlösungen, Suspensionen) vakuum- oder druckinfiltriert werden. Die infiltrierten Lösungen enthalten stöchiometrisch aufeinander abgestimmte Metallverbindungen, die nach dem Austreiben der Lösungsmittel und einer anschließenden Temperaturbehandlung bei z.B. 1400°C/2h Oxidverbindungen aus der Gruppe der Anosovite, Pseudobrookit, Korrooite, $Al_2TiO_5$, $Al_2O_3$, $TiO_2$, Mullit, $MgAl_2O_4$ und/oder deren Mischungen synthesieren. Die Porenoberflächen werden somit mit z.B. Aluminiumtitanat beschichtet und/oder die Poren mit Aluminiumtitanat gefüllt. Auch hier hat sich überraschenderweise gezeigt, daß die so behandelten offenporösen Nichtoxidkeramiken auch unter oxidierenden Bedingungen gegenüber NE-Metallschmelzen eine verbesserte Korrosionsbeständigkeit zeigen. Derartige Verfahren sind z.B. aus der Engobiertechnik, in der $AL_2O_3$-haltige Suspensionsschichten auf rekristallisierende SiC-Platten, die als Brennunterlage im Porzellanbrand dienen, zur Vermeidung von Glasur an Klebungen aufgetragen werden, bekannt.

Eine weitere Ausführungsform der Erfindung schlägt vor, daß zwischen Bauteiloberfläche und der Korrosionsschutzschicht eine thermisch gespritzte Haftschicht aufgebracht wird. Dadurch ist eine nochmalige Verbesserung der Anbindung der Korrosionsschutzschicht an die Bauteiloberfläche möglich. Die thermische Haftschicht kann dabei ausgewählt sein aus der Gruppe Si, Ni, NiAl, Cr oder Mischungen bzw. Legierungen und/oder NiCrAlY und/oder FeCrAlY und/oder CoCrAlY und/oder Ni-CoCrAlY-Legierungen.

Besonders hervorzuheben ist, daß die vorstehend beschriebenen Schutzschichten für Keramiken eingesetzt werden, die bedingt durch gute Benetzbarkeit und/oder ungenügende Korrosionsbeständigkeit nach dem derzeitigen Stand der Technik nicht oder kaum verwendet werden können. Diese Werkstoffe sind Keramiken auf der Basis von rekristalliertem SiC (R-SiC, offenporös), siliciuminfiltriertem SiC (SiSiC, dicht) und gesintertem SiC (SSiC, dicht), oder nitrisch gebundenem Sic (N-SiC, dicht).

Diese Werkstoffgruppe zeichnet sich analog den obengenannten nitridischen und/oder oxynitridischen Keramiken durch sehr gute Temperaturwechsel-Beständigkeiten und hohe Festigkeiten aus. SiC-Oberflächen werden sowohl in oxidiertem Zustand als auch in oxidfreiem Zustand von z.B. Al-Schmelzen oder Ni-Schmelzen benetzt (Forrest, C.W., Kennedy, P.: "The Fabrication of Refel Silicon Carbide Components by Isostatic Pressing" in: Proc. 6th Symp. Special Ceramics; Brit. cerm. Res. Ass. Special ceramics 6, 183-4, 1974). Darüber hinaus kann SiC je nach Anwendungstemperatur nach

$$4\,Al(l) + 3\,SiC \Leftrightarrow Al_4C_3 + 3\,SiC$$

(Benetzung und Carbidbildung)

oder

$$xNi(l) + ySiC \Leftrightarrow Ni_xSi_y(l) + yC$$

(Benetzung und Silicidbildung)

oder

$$xCu(l) + ySiC \Leftrightarrow Cu_xSi_y(l) + yC$$

(keine Benetzung, jedoch Silicidbildung)

reagieren. So bietet die typischerweise rauhe Oberfläche des offenporösen R-SiC durch die gute Benetzbarkeit einen sehr guten Haftgrund für erstarrende Schmelzen und kann andererseits von dem schmelzflüssigen Metall infiltriert werden. SSiC ist hingegen ein dichter hochfester Werkstoff, für den aber ebenfalls die prinzipielle Benetzbarkeit und/oder Reaktionsfähigkeit mit z.B. Al-, Ni- und Cu-Schmelzen gilt.

Die siliciuminfiltrierte SiC (SiSiC) hat herstellungsbedingt einen Anteil von z.B. 15 % freies Si-Metall. Analog zu R-SiC unf SSiC wird auch SiSiC von Al- und Ni-Schmelzen benetzt. Zusätzlich wird die freie Si-Phase des SiSiC im direkten Kontakt mit Al-, Cu- und Ni-Schmelzen durch die Bildung niedrigschmelzender Eutektika aus dem Werkstoff herausgelöst. Folglich ist auch dieser Werkstoff gegenüber diesen NE-Schmelzen unbeständig.

Überraschenderweise können diese Keramiken durch oxidische Schutzschichten auf der Basis der Gruppe der Anosovite, Pseudobrookit, Korrooite, $Al_2TiO_5$, $Al_2O_3$, $TiO_2$, $MgAl_2O_4$, Mullit und/oder deren Mischungen im direkten Kontakt mit NE-Schmelzen unter sowohl oxidierenden als auch unter nichtoxidierenden Bedingungen eingesetzt werden. Die z.B. thermisch gespritzten Korrosionsschutzschichten werden dabei je nach Werkstoff mit z.T. unterschiedlichen Beschichtungsabläufen auf die Keramikoberflächen aufgetragen. Der Beschichtungsablauf ist von dem jeweiligen Haftgrund der Korrosionsschutzschicht auf der Keramikoberfläche abhängig. Die Oberflächen der dichten SiSiC- und SSiC-Keramiken sollten vorteilhafterweise z.B. durch zusätzlich aufgebrachte Haftschichten (wie vorstehend erwähnt) und/oder mechanische und/oder chemische Aufrauhung vorbehandelt werden, um einen besseren Haftgrund für die eigentlichen Korrosionsschutzschichten zu bieten. Die offenporösen R-SiC-Keramiken bieten aufgrund ihrer typisch rauhen Oberflächen einen ausreichend guten Haftgrund für die Korrosionsschutzschichten. Die auf die R-SiC-, SiSiC- und SSiC-Oberflächen aufgebrachten Korrosionsschutzschichten agieren auch hier unter sowohl sauerstofffreien als auch oxidierenden Bedingungen gegenüber NE-Schmelzen korrosionsschützend. Dies bedeutet, daß beschichtete SiC-Keramiken in direktem Kontakt mit NE-Schmelzen eingesetzt werden können, ohne daß die Si- oder SiC-Anteile von der Schmelze benetzt werden, mit dieser Reaktionen eingehen und Kontaminationen einbringen. Die Stabilität und die Haftung der Korrosionsschutzschichten werden auch hier durch oxidierende Bedingungen nicht negativ beeinflußt. Ergänzend können offenporöse SiC-Keramiken (z.B. R-SiC) ergänzend mit anorganischen oder organischen Lösungen infiltriert werden, die nach einer Temperaturbehandlung Syntheseprodukte aus der Gruppe der Anosovite, Pseudobrookit, Karrooite, $Al_2TiO_5$, $Al_2O_3$, $TiO_2$, $MgAl_2O_4$, Mullit und/oder deren Mischungen bilden und somit auch die innere Porenoberfläche der Werkstoffe vor einer Korrosion durch NE-Schmelzen schützen.

Mit einer verlängerten Lebensdauer der keramischen Bauteile ist eine unmittelbare Kostenreduzierung in der Herstellung und Verarbeitung von NE-Schmelzen verbunden.

Die folgenden Beispiele erläutern die Erfindung und illustrieren die unterschiedlichen Beschichtungsvarianten auf SiC-Bauteilen im Einsatz in NE-Schmelzen.

**Beispiele:**

Als SiC-Bauteile wurden einseitig geschlossene Rohre mit $d_a$ = 30 mm und l = 400 mm aus den Werkstoffen

a) R-SiC (rekristallisiertes SiC),
b) Ni-SiC (nitridgebundenes SiC),
c) SiSiC (siliciuminfiltriertes reaktionsgebundenes SiC), und
d) SSiC (gesintertes SiC)

verwendet. Als rein nitridisches Material wurde reaktionsgebundenes Siliciumnitrid (RBSN) verwendet. Die jeweiligen Beschichtungen wurden folgendermaßen hergestellt:

(1) Thermisch gespritzte Schichten mittels roboterunterstützter Plasmaspritzapparatur (Luftatmosphäre, APS) ein- bzw. mehrschichtig aufgetragen auf Spritzschichten nach vorherigem Strahlen der Bauteiloberflächen mit sogenanntem Strahlkorund.

(2) Infiltration der Bauteile mit Sol-Feststoffsuspension aus 15 % $Al_2TiO_5$-Pulver ($d_{90}$ < 3 μm) und 85 % wäßriger Lösung aus Aluminiumoxyhydroxid-Hydrat und/oder Aluminiumacetat und/oder Aluminiumnitrat (1%ig). Bauteile wurden im Vakuumbehältnis bei p<100 mbar mit Sol-Feststoffsuspension infiltriert, bei RT für 24h, bei 110°C für 24h und bei 600°C für 1h getrocknet und dehydratisiert.

(3) Infiltration der Bauteile mit Sol-Feststoffsuspension, bestehend aus wäßriger Lösung aus Aluminiumoxyhydroxid-Hydrat und/oder Aluminiumacetat und/oder Aluminiumnitrat und $TiO_2$-Pulver ($d_{90}$ > 1 µm) im stöchiometrischen Verhältnis von Al2O3 zu $TiO_2$ von 1:1 und zusätzlich 3% MgO (aus dispergiertem $MgCO_3$). Bauteile wurden im Vakuumverhältnis bei p < 100 mbar mit Sol-Feststoffsuspension infiltriert, bei RT für 24 h, bei 110°C für 24h und bei 600°C für 1h getrocknet und entwässert, anschließend thermische Synthese von Al2O3 und $TiO_2$ und MgO zu stabilisiertem $Al_2TiO_5$ bei 1450°C/2h an Luftatmosphäre.

Die nach (1) beschichteten Bauteile wurden in unterschiedliche NE-Schmelzen nach folgendem Konzept eingesetzt und untersucht:

-  Unterteilung der Rohre in beschichtete Bauteile,
   beschichtete und nachträglich bei 1350°C/10h (SiSiC) bzw. 1400°C/10h (SSiC, N-SiC, R-SiC, RBSN) an Luftatmosphäre geglühte Bauteile (Einfluß einer oxidierten SiC-Oberfläche auf korrosiven Angriff und/oder Beschichtung),

-  dreißigmal wechselweises Eintauchen der geschlossenen Rohre auf halbe Länge und 2/3 Länge für jeweils 100h in die NE-Schmelze (Einfluß der wechselnden Schmelzbadhöhe auf den kritischen Dreiphasenbereich Keramikoberfläche/Schmelze/Gasatmosphäre,

-  makroskopische und mikroskopische Beurteilung der gesamten Bauteiloberflächen und Bauteilquerschnitte im kritischen Dreiphasenbereich Keramikoberfläche/Schmelze/Gasatmosphäre (Gefügeanalyse).

Die Schmelze bestand aus Hüttenaluminium mit 99,5 % Al, T= 850°C, Luftatmosphäre.

**Beispiel Nr. I**

Bauteile:

-  R-SiC plasmabeschichtet nach Verfahren (1) mit ca. 150 µ $Al_2TiO_5$,
-  N-SiC plasmabeschichtet nach Verfahren (1) mit ca. 150 µm $Al_2TiO_5$,
-  SiSiC plasmabeschichtet nach Verfahren (1) mit ca. 20 µm Si-Haftschicht und ca. 150 µm $Al_2TiO_5$,
-  RBSN plasmabeschichtet nach Verfahren (1) mit ca. 20 µm Si-Haftschicht und 50 µ $Al_2TiO_5$,

ergänzend:

-  R-SiC unbeschichtet
-  SiSiC unbeschichtet
-  N-SiC unbeschichtet
-  RBSN unbeschichtet

**Ergebnis:**

Sowohl allen beschichteten als auch beschichten und nachträglich oxidierten Proben ist gemeinsam, daß keinerlei chemische Reaktionen zwischen der Al-Schmelze und der $Al_2TiO_5$-Beschichtung bzw. den SiC-Grundkörpern stattgefunden haben. Die Tialit-Beschichtung wird von der Al-Schmelze nicht benetzt. Im Übergangsbereich der Al-Schmelzbad-Oberfläche zur Keramikoberfläche haftet bevorzugt oxidiertes oder teiloxidiertes Al auf der Tialit-Beschichtung. Mikroskopische Querschnittsuntersuchungen zeigten, daß bei keiner der Proben eine Schädigungsreaktion zwischen dem Al oder teiloxidierten Al und der Beschichtung sowie den SiC-Bauteilen stattgefunden haben. Proben, die bei 1350°C/10h bzw. 1400°C/10h einem Oxidationsbrand unterzogen wurden, zeigten ein analoges Erscheinungsbild. Zusätzlich positiv wirkte sich der Oxidationsbrand in einer oxidischen Bindungsbildung in Form einer amor-phen $SiO_2$-Schicht zwischen der SiSiC- bzw. SSiC-Oberfläche und der Si-Haftschicht aus.
Die unter analogen Versuchsbedingungen unbeschichteten Bauteile zeigten nach dem Einsatz in der Al-Schmelze unterschiedliche Erscheinungsformen. Die R-SiC- und SiSiC-Bauteile wurden sowohl im direkten Schmelzkontakt als auch im Übergangsbereich zwischen Al-Schmelzbad-Oberfläche und Kreamikoberfläche korrosiv angegriffen. Das R-SiC zeigte im Bauteilquerschnitt ausgeprägte Infiltrationsbereiche sowie oberflächige Zersetzungsreaktionen. Das SiSiC zeigte insbesondere im Bereich des direkten Al-Schmelzkontaktes im Bauteilquerschnitt eine zunehmende Lösung der Si-Phase sowie im Übergangsbereich zur Schmelzbadoberfläche eine deutliche Zunahme der Porosität.

Die nitridischen Bauteile N-SiC und RBSN wurden im direkten Kontakt mit der Al-Schmelze nicht korrosiv angegriffen. Im Übergangsbereich der Schmelzbad-Oberfläche zur Keramikoberfläche waren neben Anhaftungen aus teiloxidiertem Al lokale korrosive Grenzflächenreaktionen zur Nitridphase des N-SiC und des RBSN mikroskopisch feststellbar, welche sich mit zunehmender Versuchsdauer lokal bis zu mehreren 100 μm ausweiteten. Die bei 1400°C/ 10h voroxidierten N-SiC- und RBSN-Bauteile zeigten hingegen auch im direkten Schmelzkontakt neben einer Benetzung korrosive Grenzflächenreaktionen, die zu Einengungen des tragenden Bauteilquerschnittes führen. Je nach Porosität konnten bei N-SiC lokale Korrosionsbereiche bis zu 1 mm Tiefe festgestellt werden.

**Beispiel Nr. II:**

Bauteile:

i R-SiC plasmabeschichtet nach Verfahren (1) mit ca. 40 μm Al2O3,

ii SiSiC plasmabeschichtet nach Verfahren (1) mit ca. 20 μm Si-Haftschicht und ca. 40 μm $MgAl_2O_4$,

iii SSiC plasmabeschichtet nach Verfahren (1) mit ca. 20 μm Si-Haftschicht und ca. 50 μm 97% Al2O3 / 3% $TiO_2$,

iiii R-SiC plasmabeschichtet nach Verfahren (1) mit ca. 40 μm Al2O3, anschließend ca. 45 μm 50 % $MgAl_2O_4$ / 50 % MgO-stab. $ZrO_2$, anschließend ca. 40 μm MgO-stab. $ZrO_2$ (Mehrschichtaufbau zum Ausgleich der unterschiedlichen Wärmeausdehnungskoeffizienten zwischen SiC und $ZrO_2$).

iiiii SiSiC vakuumplasmabeschichtet mit einer ca. 20 μm NiAL Haftschicht und nach Verfahren (1) plasmabeschichtet mit einer 50 : 50 Mischung aus $Al_2O_3$-Mullit ca. 40 μm, anschließend mit ca. 150 μm aus einer Mischung (50 : 50) Mullit-Tialit

**Ergebnis:**

Die Al2O3-, $MgAl_2O_4$- und 97 % Al2O3 / 3 % $TiO_2$-Schutzschichten werden teilweise von der Al-Schmelze benetzt, die $ZrO_2$-Beschichtung wird vollständig von der Al-Schmelze benetzt. Bevorzugte Anhaftungen liegen analog zu Beispiel I im Übergangsbereich der Schmelzbad-Oberfläche und Bauteilbeschichtung vor. Die mit einer Außenkorrosionsschutzschicht aus 50 : 50 Mullit-Tialit beschichtete SiSiC-Probe wurde bedingt durch den Tialit-Anteil der Schutzschicht von der Al-Schmelze nicht benetzt. Keine der Proben zeigte im Querschnitt einen chemisch korrosiven Angriff der SiC-Grundkörper durch die Al-Schmelze. Die voroxidierten SiSiC- und SSiC-Bauteile zeigen eine vorteilhafterweise zusätzliche chemische Bindungsbildung zwischen SiSiC bzw. SiC und der Si-Haftschicht über eine amorphe $SiO_2$-Phase.

**Beispiel Nr. III:**

Bauteil:

i R-SiC infiltriert nach Verfahren (2) mit Sol-Feststoffsuspension aus Aluminiumoxyhydroxid-Hydrat/Aluminiumacetat Sol mit Tialit-Pulver.

ii R-SiC infiltriert mit einer Sol-Feststoffsuspension nach Verfahren (3) mit $Al(NO_3)_3$-Hydrat-Lösung und dispergiertem $TiO_2$ + MgO.

**Ergebnis:**

Ähnlich den Ergebnissen in Beispiel 1 werden die R-SiC-Bauteile durch die Infiltrationen mit Tialit-Partikeln bzw. nach dem Synthesebrand insitu gebildeten Tialit über die gesamte Probenlänge von der Al-Schmelze nicht benetzt und folglich nicht infiltriert, so daß keine Bauteilschädigung eintritt. Die für diesen Fall mit 1% AlOOH-Gehalt relativ niedriggehaltene Sol-Konzentration hat in erster Linie einen Bindemittelcharakter zur Fixierung der Tialit-Partikel auf den äußeren und inneren Oberflächen des Bauteiles. Die voroxidierten Proben zeigten ein analoges Erscheinungsbild.

**Cu-Legierung**

Die Schmelze bestand aus 70% Cu und 30% Zn, T = 1200°C, Luftatmosphäre

**Beispiel Nr. IV:**

Bauteil:

i SiSiC plasmabeschichtet nach Verfahren (1) mit einer ca. 20 µm Si-Haftschicht und ca. 150 µm Tialit

ii SiSiC vakuumplasmabeschichtet mit NiCoCrALY (ca. 20 µm) als Haftschicht und nach Verfahren (1) mit ca. 150 µm $Al_2TiO_5$

ergänzend:
  unbeschichtetes SiSiC

**Ergebnis:**

Die im direkten Schmelzkontakt befindlichen Bereiche der Bauteile werden nur unvollständig von der Schmelze benetzt. Schlackenanhaftungen aus teiloxidiertem Cu und Zn liegen am Übergangsbereich der Schmelzbad-Oberfläche und Tialitschutzschicht vor.

Korrosive Grenzflächenreaktionen zu den SiC-Bauteiloberflächen und Bauteilquerschnitten können über die gesamte Probenlänge nicht festgestellt werden. Die Oxidationsbehandlung der beschichteten SiSiC-Probe bei 1350°C/10h zeigt vorteilhafterweise eine chemische Bindungsbildung zwischen Si und SiSiC über eine amorphe $SiO_2$-Phase.

Die unbeschichtete SiSiC-Probe zeigte unabhängig von einer vorgschalteten Oxidationsbehandlung ausgeprägte Grenzflächenreaktionen mit der Cu-Schmelze. Die Si-Phase des SiSiC wird bevorzugt durch die Schmelze gelöst. Im Übergangsbereich der Schmelzbad-Oberfläche liegen Schlackenanhaftungen des teiloxidierten Cu und Zn vor, die das voroxidierte SiSiC bevorzugt benetzen. Zusätzlich haben sich Teilporositäten durch den korrosiven Angriff der Schmelze auf die Si-Phase des SiSiC ausgebildet.

**Patentansprüche**

1.  Keramisches Bauteil aus rekristallisiertem SiC, siliciuminfiltriertem SiC, nitridisch gebundenem SiC oder gesintertem SiC für Anlagen zur Herstellung und/oder Weiterverarbeitung von NE-Metallschmelzen, wobei das Bauteil zumindest teilweise mit der NE-Metallschmelze und einer sauerstoffhaltigen Gasatmosphäre in Kontakt steht, dadurch **gekennzeichnet**,
    daß die äußere und/oder innere Oberfläche zumindest im Kontaktbereich mit mindestens einer entnetzenden oxidkeramischen Korrosionsschutzschicht, dessen Material ausgewählt ist aus der Gruppe Anosovite, Pseudobrookite, Karrooite, $Al_2TiO_5$, $Al_2O_3$, $TiO_2$, $MgAl_2O_4$, Mullit oder deren Mischungen versehen ist.

2.  Keramisches Bauteil nach Anspruch 1, dadurch gekennzeichnet, daß die Korrosionsschutzschicht aus Tialit ($Al_2TiO_5$) besteht.

3.  Keramisches Bauteil nach Anspruch 1, dadurch gekennzeichnet, daß die oxidkeramische Korrosionsschutzschicht durch ein thermisches Spritzverfahren aufgebracht ist.

4.  Keramisches Bauteil nach mindestens einem der Ansprüche 1 bis 3,
    dadurch gekennzeichnet, daß die Korrosionsschutzschicht auf der äußeren und/oder inneren Oberfläche über eine Flüssigphasenbeschichtung und/oder Flüssigphasentränkung und/oder Suspensionsbeschichtung und/oder Suspensionstränkung aufgebracht ist.

5.  Keramisches Bauteil nach mindestens einem der Ansprüche 1 bis 4,
    dadurch gekennzeichnet, daß eine bis zwanzig Einzelschichten mit einer Schichtdicke im Bereich von 1 bis 500 µm, bevorzugt von 1 bis 100 µm, aufgebracht sind.

**6.** Keramisches Bauteil nach mindestens einem der Ansprüche 1 bis 5,
dadurch gekennzeichnet, daß zwischen der Bauteiloberfläche und der Korrosionsschutzschicht eine thermisch gespritzte Haftschicht aufgebracht ist.

**7.** Keramisches Bauteil nach Anspruch 6,
dadurch gekennzeichnet, daß die thermische Haftschicht ausgewählt ist aus der Gruppe Si, Ni, NiAl, Cr oder Mischungen bzw. Legierungen und/oder NiCrAlY und/oder FeCrAlY und/oder CoCrAlY und/oder Ni-CoCrAlY-Legierungen.

**8.** Keramisches Bauteil nach mindestens einem der Ansprüche 1 bis 7,
dadurch gekennzeichnet, daß das keramische Bauteil ein Thermoelementschutzrohr, eine Spüllanze, ein Heizstrahlrohr, ein Rohr, ein Gießlöffel oder ein Steigrohr ist.

**Claims**

**1.** Ceramic component comprising recrystallized SiC, silicon-infiltrated SiC, nitride-bonded SiC or sintered SiC for plants for producing and/or further processing nonferrous metal melts in which the component is at least partly in contact with the nonferrous metal melt and an oxygen-containing gas atmosphere, characterized in that the outer and/or inner surface is provided, at least in the contact region, with at least one antiwetting oxide-ceramic corrosion protection layer whose material is selected from the group consisting of anosovite, pseudobrookite, karrooite, $Al_2TiO_5$, $Al_2O_3$, $TiO_2$, $MgAl_2O_4$, mullite or mixtures thereof.

**2.** Ceramic component according to Claim 1, characterized in that the corrosion protection layer consists of tialite $(Al_2TiO_5)$.

**3.** Ceramic component according to Claim 1, characterized in that the oxide-ceramic corrosion protection layer is applied by a thermal spraying process.

**4.** Ceramic component according to at least one of Claims 1 to 3, characterized in that the corrosion protection layer on the outer and/or inner surface is applied by means of liquid-phase coating and/or liquid-phase impregnation and/or suspension coating and/or suspension impregnation.

**5.** Ceramic component according to at least one of Claims 1 to 4, characterized in that from 1 to 20 individual layers having a thickness in the range from 1 to 500 $\mu$m, preferably from 1 to 100 $\mu$m, are applied.

**6.** Ceramic component according to at least one of Claims 1 to 5, characterized in that a thermally sprayed bonding layer is applied between the component surface and the corrosion protection layer.

**7.** Ceramic component according to Claim 6, characterized in that the thermal bonding layer is selected from the group consisting of Si, Ni, NiAl, Cr or mixtures or alloys and/or NiCrAlY and/or FeCrAlY and/or CoCrAlY and/or Ni-CoCrAlY alloys.

**8.** Ceramic component according to at least one of Claims 1 to 7, characterized in that the ceramic component is a protective sheath for a thermocouple, a purging lance, a radiant heating tube,, a tube, a casting ladle or a riser pipe.

**Revendications**

**1.** Elément céramique à base de SiC recristallisé, SiC infiltré par du silicium, SiC lié par nitruration ou SiC fritté pour des installations de production et/ou de post-traitement de bains de fusion de métaux non-ferreux, l'élément étant au moins partiellement en contact avec le bain de fusion de métal non ferreux et une atmosphère gazeuse contenant de l'oxygène, caractérisé en ce que la surface externe et/ou interne est pourvue au moins dans la zone de contact d'au moins une couche anticorrosion de déréticulation à base d'oxyde céramique, dont la matière est choisie dans le groupe formé par l'anosovite, la pseudobrookite, la karrooite, $Al_2TiO_5$, $Al_2O_3$, $TiO_2$, $MgAl_2O_4$, la mullite ou leurs mélanges.

**2.** Elément céramique selon la revendication 1, caractérisé en ce que la couche anticorrosion est constituée de tialite

$(Al_2TiO_5)$.

3. Elément céramique selon la revendication 1, caractérisé en ce que la couche anticorrosion à base d'oxyde de céramique est appliquée à l'aide d'un procédé de pulvérisation thermique.

4. Elément céramique selon l'une quelconque des revendications 1 à 3, caractérisé en ce que la couche anticorrosion est appliquée sur la surface externe et/ou interne en la revêtant d'une phase liquide et/ou en l'imprégnant d'une phase liquide et/ou en la revêtant d'une suspension et/ou en l'imprégnant d'une suspension.

5. Elément céramique selon au moins une des revendications 1 à 4, caractérisé en ce qu'une à vingt couches individuelles sont appliquées avec une épaisseur de couche dans la plage de 1 à 500 µm, de préférence de 1 à 100 µm.

6. Elément céramique selon au moins une des revendications 1 à 5, caractérisé en ce qu'une couche adhésive thermiquement pulvérisée est appliquée entre la surface de l'élément et la couche anticorrosion.

7. Elément céramique selon la revendication 6, caractérisé en ce que la couche adhésive thermique est choisie dans le groupe formé par Si, Ni, NiAl, Cr, ou mélanges ou alliages et/ou NiCrAlY et/ou FeCrAlY et/ou CoCrAlY et/ou alliages Ni-CoCrAlY.

8. Elément céramique selon au moins une des revendications 1 à 7, caractérisé en ce que l'élément céramique est un tube protecteur de thermocouple, une lance de rinçage, un tube chauffant rayonnant, un tube, une louche à couler ou un tuyau ascendant.